(19) Europäisches Patentamt
European Patent Office
Office européen des brevets

(11) EP 4 230 675 A1

(12) EUROPEAN PATENT APPLICATION
published in accordance with Art. 153(4) EPC

(43) Date of publication:
**23.08.2023 Bulletin 2023/34**

(21) Application number: **21880205.6**

(22) Date of filing: **14.10.2021**

(51) International Patent Classification (IPC):
***C08G 59/40*** (2006.01) ***C09J 11/00*** (2006.01)
***C08L 67/00*** (2006.01) ***C09J 163/00*** (2006.01)
***C09J 167/00*** (2006.01) ***C08G 63/91*** (2006.01)

(52) Cooperative Patent Classification (CPC):
**C08G 59/40; C08G 63/91; C08L 67/00; C09J 11/00; C09J 163/00; C09J 167/00;**
Y02W 30/62

(86) International application number:
**PCT/JP2021/038128**

(87) International publication number:
**WO 2022/080470 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2020 JP 2020174536**

(71) Applicant: **TOYOBO CO., LTD.**
**Osaka-shi**
**Osaka 5300001 (JP)**

(72) Inventors:
- **UCHIYAMA, Shoko**
  **Otsu-shi, Shiga 520-0292 (JP)**
- **HAYASHI, Mikihiro**
  **Nagoya-shi, Aichi 466-8555 (JP)**

(74) Representative: **Müller-Boré & Partner**
**Patentanwälte PartG mbB**
**Friedenheimer Brücke 21**
**80639 München (DE)**

# (54) CROSSLINKED POLYESTER RESIN

(57) An object is to provide a crosslinked polyester resin that has high strength at room temperature but is capable of reprocessing, adhesion between films, and self-repair at a softening temperature thereof or higher, due to dynamic covalent crosslinks allowing bond exchange at high temperatures, that exhibits softening behavior due to bond exchange by a transesterification reaction even without containing any transesterification catalyst, and that exhibits self-adhesiveness, remoldability, and scratch repair properties.

A crosslinked polyester resin in which a polyester resin having a carboxy group on a side chain is crosslinked by an epoxy-based crosslinking agent having a plurality of epoxy groups, wherein the epoxy-based crosslinking agent includes an epoxy amine compound having two or more tertiary amino groups and two or more epoxy groups in a molecule, and an amount of the epoxy amine compound is 3 to 30 parts by mole per 100 parts by mole of the carboxy group of the polyester resin.

[FIG. 1]

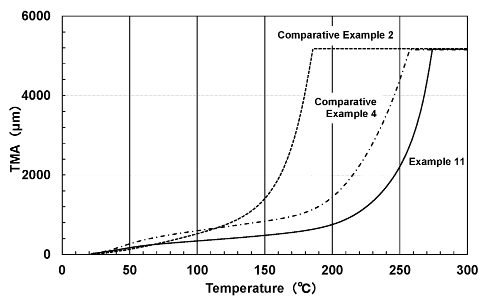


EP 4 230 675 A1

## Description

### TECHNICAL FIELD

The present invention relates to a polyester resin in which a polyester resin having a carboxy group on a side chain is crosslinked by an epoxy-based crosslinking agent having a plurality of epoxy groups.

### BACKGROUND ART

Polyester resins are polycondensates each synthesized by dehydration condensation of a polyvalent carboxylic acid and a polyalcohol, and examples thereof include linear polymers each produced from terephthalic acid or an ester-forming derivative thereof and ethylene glycol. Polyester resins are excellent in terms of versatility and practicality, and are suitable for use as, for example, materials for films, sheets, fibers, bottles, etc. In addition, polyester resins are expected to be applied to various applications in the future due to excellent mechanical properties, weather resistance, and chemical resistance thereof, and examples of the applications include applications for electrical insulation, applications for solar cells, and applications for industrial parts such as tire cords.

Such polyester resins are crosslinked to each other by a crosslinking agent and also used as crosslinked polyester resins. For example, Patent Document 1 describes an adhesive composition containing a carboxylic acid group-containing polymer compound and having excellent heat and humidity resistance adaptable to lead-free solder at high humidity while maintaining good adhesiveness to various plastic films, metals, and glass epoxy. This carboxylic acid group-containing polymer compound contains at least a polymer polyol (A), a polymer polyol (B) different from the polymer polyol (A), and tetracarboxylic dianhydride as copolymerization components. EXAMPLES of Patent Document 1 disclose, as an example of the adhesive composition, an adhesive composition obtained by adding 9 parts of YDCN-700-10 (novolac-type epoxy resin) manufactured by NIPPON STEEL Chemical & Material Co., Ltd., as an epoxy resin, and 0.1 parts of TETRAD (registered trademark)-X (N,N,N',N'-tetraglycidyl-m-xylenediamine) manufactured by MITSUBISHI GAS CHEMICAL COMPANY, INC., to 100 parts of the solid content of a carboxylic acid group-containing polymer compound (C1) and adjusting a solid concentration to 35% using methyl ethyl ketone.

Also, Patent Document 2 describes an adhesive composition containing a carboxylic acid group-containing polymer compound and having properties similar to those in Patent Document 1 above. This adhesive composition is an adhesive composition containing a carboxylic acid group-containing polyester resin (A) and an epoxy resin (B), and the carboxylic acid group-containing polyester resin (A) contains a polymer polyol (A1), a polymer polyol (A2) different from the polymer polyol (A1), and tetracarboxylic dianhydride as copolymerization components. EXAMPLES of Patent Document 2 describe, as an example of the adhesive composition, an adhesive composition obtained by adding 9 parts of YDCN-700-10 (novolac-type epoxy resin) manufactured by NIPPON STEEL Chemical & Material Co., Ltd., as an epoxy resin, and 0.1 parts of TETRAD (registered trademark)-X (N,N,N',N'-tetraglycidyl-m-xylenediamine) manufactured by MITSUBISHI GAS CHEMICAL COMPANY, INC., to 100 parts of the solid content of a carboxylic acid group-containing polyester resin (A-1) and adjusting a solid concentration to 35% using methyl ethyl ketone.

The adhesive compositions described in Patent Documents 1 and 2 have excellent heat and humidity resistance.

Meanwhile, as a crosslinked polyester resin, Patent Document 3 describes a resin that exhibits self-adhesiveness, remoldability, and scratch repair properties. This crosslinked polyester resin is characterized in containing: a polyester resin including a polymer main chain containing ester bonds at multiple points and multiple covalent crosslinked portions containing ester bonds and free OH groups; and a transesterification catalyst. Since the crosslinked polyester resin described in Patent Document 3 contains the transesterification catalyst, the free OH group attacks a C-O bond that is one ester bond out of many ester bonds existing in the vicinity thereof due to the action of the transesterification catalyst existing in the vicinity thereof, whereby a transesterification reaction occurs, and properties such as self-adhesiveness can be exhibited. EXAMPLES of Patent Document 3 disclose an example of using zinc acetate as the transesterification catalyst.

### PRIOR ART DOCUMENTS

### PATENT DOCUMENTS

Patent Document 1: WO2018/105543
Patent Document 2: WO2018/179707
Patent Document 3: WO2020/045439

## DISCLOSURE OF THE INVENTION

## PROBLEMS TO BE SOLVED BY THE INVENTION

Since zinc acetate used in EXAMPLES of Patent Document 3 is a metal, it is difficult to utilize a crosslinked polyester resin containing zinc acetate, in applications for electrical materials. Therefore, a crosslinked polyester resin that exhibits softening properties at high temperatures even without containing any transesterification catalyst and that exhibits self-adhesiveness, remoldability, and scratch repair properties, is desired.

The present invention has been made in view of the above circumstances, and an object of the present invention is to provide a crosslinked polyester resin that has high strength at room temperature but is capable of reprocessing, adhesion between films, and self-repair at a softening temperature thereof or higher, due to dynamic covalent crosslinks allowing bond exchange at high temperatures, that exhibits softening behavior due to bond exchange by a transesterification reaction even without containing any transesterification catalyst, and that exhibits self-adhesiveness, remoldability, and scratch repair properties. In addition, another object of the present invention is to provide a crosslinked polyester resin that can lower a processing temperature while maintaining heat resistance even when a transesterification catalyst is contained.

## SOLUTIONS TO THE PROBLEMS

The present invention is as follows.

[1] A crosslinked polyester resin in which a polyester resin having a carboxy group on a side chain is crosslinked by an epoxy-based crosslinking agent having a plurality of epoxy groups, wherein the epoxy-based crosslinking agent includes an epoxy amine compound having two or more tertiary amino groups and two or more epoxy groups in a molecule, and an amount of the epoxy amine compound is 3 to 30 parts by mole per 100 parts by mole of the carboxy group of the polyester resin.

[2] The crosslinked polyester resin according to [1], wherein a molar ratio of the carboxy group of the polyester resin to the epoxy group of the epoxy amine compound is 1:0.125 to 1:1.2 as the carboxy group : the epoxy group.

[3] The crosslinked polyester resin according to [1] or [2], wherein the tertiary amino group and the epoxy group contained in the epoxy amine compound form a diglycidylamino group.

[4] The crosslinked polyester resin according to any one of [1] to [3], wherein the epoxy amine compound has a molecular weight of not higher than 800.

[5] A crosslinked polyester resin composition comprising:

a transesterification catalyst; and
the crosslinked polyester resin according to any one of [1] to [4].

## EFFECTS OF THE INVENTION

In the present invention, the polyester resin having a carboxy group on a side chain is crosslinked by the epoxy-based crosslinking agent containing an epoxy amine compound having two or more tertiary amino groups and two or more epoxy groups in a molecule. As a result, the tertiary amino groups contained in the molecule of the epoxy amine compound act like a transesterification catalyst, so that it is possible to provide a crosslinked polyester resin that exhibits softening behavior due to bond exchange by a transesterification reaction even without containing any transesterification catalyst and that exhibits self-adhesiveness, remoldability, and scratch repair properties. In addition, the crosslinked polyester resin of the present invention may be a crosslinked polyester resin composition containing a transesterification catalyst, and even when the transesterification catalyst is contained, the number of crosslinking points by the epoxy amine compound does not change as compared to that when no transesterification catalyst is contained, so that a processing temperature of the crosslinked polyester resin can be lowered while maintaining the heat resistance of the crosslinked polyester resin.

## BRIEF DESCRIPTION OF THE DRAWING

[FIG. 1] FIG. 1 is a graph showing the results of measuring changes in linear expansion coefficients of crosslinked polyester resins.

[FIG. 2] FIG. 2 is a graph showing the results of measuring the storage elastic modulus (DMA) of crosslinked polyester

resins.

MODE FOR CARRYING OUT THE INVENTION

The present inventors have conducted extensive studies to provide a crosslinked polyester resin that exhibits softening behavior due to bond exchange by a transesterification reaction even without containing any transesterification catalyst containing a metal and that exhibits self-adhesiveness, remoldability, and scratch repair properties. As a result, the present inventors have found that the above problems can be solved when an epoxy-based crosslinking agent including an epoxy amine compound having two or more tertiary amino groups and two or more epoxy groups in a molecule is used as a crosslinking agent for crosslinking polyester resins and the epoxy amine compound is contained in a range of 3 to 30 parts by mole per 100 parts by mole of the carboxy group of the polyester resin, and have completed the present invention.

Hereinafter, the present invention will be described in detail.

The crosslinked polyester resin according to the present invention is a resin in which a polyester resin having a carboxy group on a side chain is crosslinked by an epoxy-based crosslinking agent having a plurality of epoxy groups, and the epoxy-based crosslinking agent includes an epoxy amine compound having two or more tertiary amino groups and two or more epoxy groups in a molecule. Here, the side chain may have a structure having a carboxy group on a substituent (e.g., an aliphatic hydrocarbon group, an aromatic hydrocarbon group, an alicyclic hydrocarbon group, etc.) branched from the main chain of an aromatic polyester resin, or may have a structure having a carboxy group directly on an aromatic polyester resin. The side chain preferably has a structure having a carboxy group directly on an aromatic polyester resin. The polyester resin is crosslinked by the two or more epoxy groups contained in the epoxy amine compound reacting with the carboxy group on the side chain of the polyester resin. That is, the crosslinked polyester resin has an ester group and a hydroxyl group formed by the reaction between the carboxy group on the side chain of the polyester resin and the epoxy groups of the epoxy amine compound. The polyester resin has improved heat resistance by being crosslinked.

The number of the epoxy groups contained in the epoxy amine compound only has to be not smaller than 2, and may be not smaller than 3, or may be not smaller than 4. The upper limit of the number of the epoxy groups is not particularly limited, but is, for example, preferably not larger than 6 and more preferably not larger than 5.

The epoxy amine compound also has tertiary amino groups in a molecule. The tertiary amino groups have the same action as a transesterification catalyst, and by heating the crosslinked polyester resin, the hydroxyl group contained in the crosslinked polyester resin attacks the C-O bond of the ester group existing in the vicinity of the hydroxyl group due to the action of the tertiary amino groups even without containing any transesterification catalyst, so that bond exchange by a transesterification reaction occurs, exhibiting softening behavior. However, if there is only one tertiary amino group contained in the molecule of the epoxy amine compound, the transesterification reaction does not proceed sufficiently, and thus self-adhesiveness, remoldability, and scratch repair properties are not exhibited. In addition, according to the present invention, even when a transesterification catalyst is contained to actively promote a transesterification reaction, the number of crosslinking points by the epoxy amine compound does not change as compared to that when no transesterification catalyst is contained, so that the softening temperature of the crosslinked polyester resin can be reduced while maintaining the heat resistance of the crosslinked polyester resin itself, and a processing temperature thereof can be lowered.

In the present invention, the number of the tertiary amino groups contained in the molecule of the epoxy amine compound is not smaller than 2. When two or more tertiary amino groups are contained, softening behavior can be exhibited.

The amount of the epoxy amine compound is 3 to 30 parts by mole per 100 parts by mole of the carboxy group of the polyester resin having a carboxy group on a side chain. When the amount of the epoxy amine compound is smaller than 3 parts by mole, the ratio of the epoxy group to the carboxy group decreases and the crosslink density becomes excessively low, so that curing does not occur. Therefore, the amount of the epoxy amine compound is not smaller than 3 parts by mole, preferably not smaller than 5 parts by mole, and more preferably not smaller than 10 parts by mole. However, when the amount of the epoxy amine compound exceeds 30 parts by mole, the ratio of the epoxy group to the carboxy group increases, so that it is considered that the excessively contained epoxy groups self-polymerize with each other, resulting in an excessively high crosslink density. As a result, it is considered that the mobility of the crosslinked polymer decreases, resulting in an excessively high softening temperature. Therefore, the amount of the epoxy amine compound is not larger than 30 parts by mole, preferably not larger than 28 parts by mole, and more preferably not larger than 26 parts by mole.

The number (hereinafter, sometimes denoted as $N_{COOH}$) of carboxy groups per polymer chain of the polyester resin can be calculated by the following method. For example, when the acid value of the polyester resin is A (mg KOH/g), since the molecular weight of KOH is 56.1 g/mol, the number of moles of carboxy groups per 1 g of the polyester resin having a carboxy group on a side chain can be represented as A/56.1 (mmol/g). When the number-average molecular

weight of the polyester resin having a carboxy group on a side chain is B (g/mol), the number of carboxy groups in the polymer chain can be represented as A/56.1×B/1000 (groups), which is defined as the number $N_{COOH}$ of carboxy groups per polymer chain.

The tertiary amino groups and the epoxy groups contained in the epoxy amine compound preferably form diglycidylamino groups represented by the following formula. In the formula, * indicates atomic bonding.

[Formula 1]

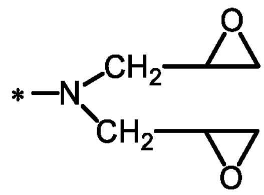

The number of the diglycidylamino groups contained in the molecule of the epoxy amine compound may be 1, but is preferably not smaller than 2. When two or more diglycidylamino groups are contained, softening behavior due to bond exchange by a transesterification reaction is easily exhibited. The number of the diglycidylamino groups is, for example, preferably not larger than 3.

Each diglycidylamino group may be bonded to an aliphatic hydrocarbon having about 1 to 10 carbon atoms (hereinafter, referred to as linking group 1), may be bonded to an aromatic hydrocarbon ring having about 6 to 20 carbon atoms (hereinafter, referred to as linking group 2), or may be bonded to a group in which two or more aromatic hydrocarbon rings having about 6 to 20 carbon atoms are bonded to an aliphatic hydrocarbon having about 1 to 10 carbon atoms (hereinafter, referred to as linking group 3). The diglycidylamino group is preferably bonded to the linking group 2 or the linking group 3, and the diglycidylamino group is particularly preferably bonded to an aromatic hydrocarbon ring (preferably, a benzene ring).

Examples of the epoxy amine compound include N,N,N',N'-tetraglycidyl-m-xylenediamine, 4,4'-methylenebis(N,N-diglycidylaniline), etc. N,N,N',N'-tetraglycidyl-m-xylenediamine is commercially available from MITSUBISHI GAS CHEMICAL COMPANY, INC., as a multifunctional epoxy compound "TETRAD-X". 4,4'-methylenebis(N,N-diglycidylaniline) is available from Tokyo Chemical Industry Co., Ltd. (TCI). One of the epoxy amine compounds may be used, or two or more of the epoxy amine compounds may be used in combination.

The epoxy amine compound preferably has a molecular weight of not higher than 800. When the molecular weight is not higher than 800, the epoxy amine compound can easily enter between polyester chains to form three-dimensional crosslinks, so that heat resistance can be improved. The molecular weight of the epoxy amine compound is more preferably not higher than 700 and further preferably not higher than 600. The lower limit of the molecular weight of the epoxy amine compound is, for example, not lower than 250.

As the epoxy-based crosslinking agent, in addition to the above epoxy amine compound (hereinafter, referred to as first epoxy amine compound), a multifunctional epoxy compound other than the first epoxy amine compound (hereinafter, referred to as other multifunctional epoxy compound) may be used. That is, as the other multifunctional epoxy compound, a compound having two or more epoxy groups in a molecule and having no tertiary amino group in a molecule (hereinafter, referred to as non-amine type epoxy compound) and a compound having two or more epoxy groups and one tertiary amino group in a molecule (hereinafter, referred to as second epoxy amine compound) that are crosslinking agents that cause a curing reaction with the carboxy group on the side chain of the polyester resin to form crosslinks, can be used. When the other multifunctional epoxy compound is used together with the first epoxy amine compound, three-dimensional crosslinks can be easily formed, so that heat resistance can be improved.

Examples of the non-amine type epoxy compound include a cresol novolac-type epoxy resin, a phenolic novolac-type epoxy resin, and an epoxy resin having a dicyclopentadiene skeleton. When the cresol novolac-type epoxy resin or the phenolic novolac-type epoxy resin is used, the crosslink density can be decreased to alleviate the stress during peeling. As a commercially available product of the cresol novolac-type epoxy resin, for example, YDCN-700 manufactured by NIPPON STEEL Chemical & Material Co., Ltd., etc., can be used. As a commercially available product of the phenolic novolac-type epoxy resin, for example, EPICLON N-700A manufactured by DIC Corporation, etc., can be used.

The epoxy compound having a dicyclopentadiene skeleton has very low hygroscopicity since the dicyclopentadiene skeleton is rigid, so that the crosslink density can be decreased to alleviate the stress during peeling. As a commercially available product of the epoxy compound having a dicyclopentadiene skeleton, for example, HP7200 series manufactured by DIC Corporation can be used.

Examples of the second epoxy amine compound include triglycidyl para-aminophenol (also called N,N-diglycidyl-4-(glycidyloxy)aniline), etc. As a commercially available product of triglycidyl para-aminophenol, for example, jER630 manufactured by Mitsubishi Chemical Corporation, etc., can be used.

These other multifunctional epoxy compounds can be used individually, or two or more of these other multifunctional epoxy compounds can be used in combination.

When the total amount of the epoxy-based crosslinking agent is 100 parts by mole, the amount of the first epoxy amine compound is preferably not smaller than 30 parts by mole. The amount of the first epoxy amine compound is more preferably not smaller than 50 parts by mole and further preferably not smaller than 80 parts by mole. The amount of the first epoxy amine compound is particularly preferably 100 parts by mole, and as the epoxy-based crosslinking agent, only an epoxy amine compound having two or more epoxy groups and two or more tertiary amino groups in a molecule is preferably used.

(Polyester Resin)

The polyester resin has a carboxy group on a side chain, and the polyester resin is crosslinked by a reaction of the carboxy group with the epoxy group contained in the epoxy-based crosslinking agent.

The polyester resin having a carboxy group on a side chain may be an aliphatic polyester, or may be an aromatic polyester. An aliphatic polyester is more preferably used from the viewpoint of enhancing self-adhesiveness, an aromatic polyester is more preferably used from the viewpoint of enhancing heat resistance, and an aliphatic polyester and an aromatic polyester may be used in combination. In addition, when the crosslinked polyester resin is used as an adhesive sheet or adhesive film for adhering a film substrate or a metal substrate, an aromatic polyester is preferably used rather than an aliphatic polyester, as the polyester resin having a carboxy group on a side chain.

The polyester resin having a carboxy group on a side chain can be prepared, for example, by a method in which polycondensation of a polyvalent carboxylic acid, a polyhydric alcohol, and a dicarboxylic acid containing a nucleophilic reactive group (thiol group or the like) is performed and then the nucleophilic reactive group is reacted with an unsaturated carboxylic acid, a method in which polycondensation of a polyvalent carboxylic acid, a polyhydric alcohol, and an unsaturated polyvalent carboxylic acid or an anhydride thereof is performed and then an unsaturated group is reacted with a carboxylic acid having a nucleophilic reactive group, or the like.

The polyvalent carboxylic acid only has to mainly consist of a dicarboxylic acid (e.g., the amount of the dicarboxylic acid per 100 parts by mole of the polyvalent carboxylic acid is not smaller than 60 parts by mole and preferably not smaller than 80 parts by mole), and examples of the dicarboxylic acid include: aromatic dicarboxylic acids such as phthalic acid, isophthalic acid, terephthalic acid, phenylene dicarboxylic acid, and 2,6-naphthalene dicarboxylic acid; aliphatic dicarboxylic acids such as succinic acid, glutaric acid, adipic acid, pimelic acid, suberic acid, azelaic acid, sebacic acid, dodecane dicarboxylic acid, and dimeric acid; alicyclic dicarboxylic acids such as 1,4-cyclohexane dicarboxylic acid, tetrahydrophthalic acid, hexahydroisophthalic acid, and 1,2-cyclohexene dicarboxylic acid; unsaturated group-containing dicarboxylic acids such as fumaric acid, maleic acid, and a terpene-maleic acid adduct; etc. One of these dicarboxylic acids can be used, or two or more of these dicarboxylic acid can be used in combination. In addition, examples of the polyvalent carboxylic acid include tricarboxylic acids and tetracarboxylic acids such as trimellitic acid, pyromellitic acid, and 3,3',4,4'-benzophenone tetracarboxylic acid, and these tricarboxylic acids and tetracarboxylic acids are preferably subjected to polycondensation reactions as acid anhydrides.

Examples of the polyhydric alcohol include: aliphatic glycols such as neopentyl glycol, ethylene glycol, 1,2-propylene glycol, 1,3-propanediol, 2-methyl-1,3-propanediol, 2,2-dimethyl-1,3-propanediol, 1,2-butanediol, 1,3-butanediol, 1,4-butanediol, 1,3-pentanediol, 1,4-pentanediol, 1,5-pentanediol, 3-methyl-1,5-pentanediol, 2,4-diethyl-1,5-pentanediol, 1,6-hexanediol, 3-methyl-1,6-hexanediol, 4-methyl-1,7-heptanediol, 2-methyl-1,8-octanediol, 4-methyl-1,8-octanediol, 4-propyl-1,8-octanediol, and 1,9-nonanediol; polyether glycols such as diethylene glycol, triethylene glycol, polyethylene glycol, polyolefin glycol, and polytetramethylene glycol; alicyclic polyols such as 1,4-cyclohexanediol, 1,2-cyclohexanedimethanol, 1,3-cyclohexanedimethanol, 1,4-cyclohexanedimethanol, tricyclodecane glycols, and hydrogenated bisphenols; glycol-modified products of aromatic dicarboxylic acids such as ethylene glycol-modified products of terephthalic acid (e.g., bis-2-hydroxyethyl terephthalate (BHET)), propylene glycol-modified products of terephthalic acid, ethylene glycol-modified products of isophthalic acid, propylene glycol-modified products of isophthalic acid, ethylene glycol-modified products of orthophthalic acid, and propylene glycol-modified products of orthophthalic acid; etc. One of these polyhydric alcohols can be used, or two or more of these polyhydric alcohols can be used in combination.

Examples of the dicarboxylic acid containing a nucleophilic reactive group include dicarboxylic acids containing a thiol group as a reactive group, and include aliphatic dicarboxylic acids having a thiol group and having about 4 to 10 carbon atoms such as thiomalic acid.

Examples of the unsaturated carboxylic acid that reacts with the nucleophilic reactive group include aliphatic $\alpha,\beta$-unsaturated monocarboxylic acids having about 3 to 10 carbon atoms such as acrylic acid, methacrylic acid, crotonic acid, and isocrotonic acid, etc.

Examples of the unsaturated polyvalent carboxylic acid include aliphatic $\alpha,\beta$-unsaturated dicarboxylic acids having about 4 to 10 carbon atoms such as maleic acid and fumaric acid, etc.

Examples of the carboxylic acid having a nucleophilic reactive group that reacts with the unsaturated group of

the unsaturated polyvalent carboxylic acid include aliphatic monocarboxylic acids having a thiol group and having about 2 to 10 carbon atoms such as thioglycolic acid and mercaptopropionic acid.

The molar ratio of the carboxy group of the polyester resin having a carboxy group on a side chain to the epoxy group of the first epoxy amine compound is preferably 1:0.125 to 1:1.2 as the carboxy group : the epoxy group. The lower limit of the molar ratio is more preferably 1:0.3, and the upper limit of the molar ratio is more preferably 1:1.1. The molar ratio is most preferably 1:1.

The polyester resin having a carboxy group on a side chain preferably has a number-average molecular weight (Mn) of, for example, 6000 to 20000. When the number-average molecular weight of the polyester resin having a carboxy group on a side chain is not lower than 6000, heat resistance can be improved. The number-average molecular weight is more preferably not lower than 6500 and further preferably not lower than 7000. However, when the number-average molecular weight of the polyester resin having a carboxy group on a side chain is excessively high, the polyester resin becomes excessively hard, resulting in becoming brittle. Therefore, the number-average molecular weight is preferably not higher than 20000, more preferably not higher than 19000, and further preferably not higher than 18000.

The polyester resin having a carboxy group on a side chain preferably has a poly dispersity index (PDI) of 1.3 to 1.8. The poly dispersity index can be calculated using the following equation based on a weight-average molecular weight (Mw) and the number-average molecular weight (Mn). PDI value = Mw/Mn

The PDI value is more preferably not lower than 1.4. However, when the PDI value is excessively high, the chain length variation becomes large, so that strength variation is likely to occur. Therefore, the PDI value is preferably not higher than 1.8 and more preferably not higher than 1.7.

The number of carboxy groups per polymer chain of the polyester resin ($N_{COOH}$) is preferably 3 to 50. When $N_{COOH}$ is not smaller than 3, the carboxy group on the side chain of the polyester resin is crosslinked by the epoxy-based crosslinking agent, so that heat resistance is improved. $N_{COOH}$ is more preferably not smaller than 3.5 and further preferably not smaller than 4. However, when $N_{COOH}$ is excessively large, the polyester resin is excessively crosslinked, and thus becomes excessively hard, resulting in becoming brittle. Therefore, $N_{COOH}$ is preferably not larger than 50, more preferably not larger than 48, and further preferably not larger than 45.

The polyester resin having a carboxy group on a side chain preferably has an acid value of not lower than 5 mg KOH/g. When the acid value is not lower than 5 mg KOH/g, heat resistance is improved. The acid value is more preferably not lower than 10 mg KOH/g and further preferably not lower than 15 mg KOH/g. On the other hand, when the acid value is too high, the crosslink density becomes too high, resulting in hardening and reduced adhesiveness. Therefore, the acid value is preferably not higher than 250 mg KOH/g, more preferably not higher than 230 mg KOH/g and further preferably not higher than 200 mg KOH/g.

(Transesterification Catalyst)

The crosslinked polyester resin of the present invention may not necessarily contain a transesterification catalyst, but may be a crosslinked polyester resin composition that contains a transesterification catalyst such that the advantageous effects of the present invention are not impaired. When the transesterification catalyst is contained, a transesterification reaction can be promoted, so that the softening temperature of the crosslinked polyester resin can be reduced while maintaining the heat resistance of the crosslinked polyester resin itself, and a processing temperature thereof can be lowered.

As the transesterification catalyst, for example, zinc acetate, triphenylphosphine, trimethylamine, triethylamine, etc., can be used, and among them, zinc acetate is preferably used. One of the transesterification catalysts may be used, or two or more of the transesterification catalysts may be used in combination.

When the transesterification catalyst is contained, the amount of the transesterification catalyst per 100 parts by mole of the carboxy group of the polyester resin is preferably not larger than 30 parts by mole, more preferably not larger than 28 parts by mole, and further preferably not larger than 25 parts by mole. When the transesterification catalyst is contained, the lower limit of the amount of the transesterification catalyst per 100 parts by mole of the carboxy group of the polyester resin is, for example, preferably not smaller than 1 part by mole, more preferably not smaller than 2 parts by mole, and further preferably not smaller than 3 parts by mole. When a plurality of transesterification catalysts are used, the total amount of the transesterification catalysts is meant.

(Crosslinked Polyester Resin)

The softening temperature of the crosslinked polyester resin of the present invention preferably has a softening temperature, due to bond exchange by a transesterification reaction, of, for example, 155 to 300°C. In the case of a crosslinked polyester resin composition containing a transesterification catalyst, the softening temperature of the crosslinked polyester resin composition is, for example, preferably not lower than 155°C, more preferably not lower than 160°C, and further preferably not lower than 165°C. When the crosslinked polyester resin does not contain a transesterification catalyst, the softening temperature of the crosslinked polyester resin is, for example, preferably not lower than 175°C, more preferably not lower than 180°C, and further preferably not lower than 190°C.

The softening temperature of the crosslinked polyester resin (crosslinked polyester resin composition) is defined as the temperature at the inflection point of a linear expansion coefficient change curve obtained by measuring a change in linear expansion coefficient when heated from room temperature to 300°C in a state where tension is applied. A specific measurement method will be described in detail in the EXAMPLES section.

The crosslinked polyester resin (crosslinked polyester resin composition) of the present invention preferably has a glass transition temperature (Tg) of -50 to 150°C. When Tg is not lower than -50°C, heat resistance can be ensured. Tg is more preferably not lower than -40°C and further preferably not lower than -30°C. However, when Tg is excessively high, processing becomes difficult, and thus Tg is preferably not higher than 150°C. Tg is more preferably not higher than 130°C and further preferably not higher than 100°C.

Next, a method for producing the crosslinked polyester resin according to the present invention will be described.

The crosslinked polyester resin of the present invention can be produced by a known method. An example of the method is a method in which the polyester resin having a carboxy group on a side chain and the epoxy-based crosslinking agent including the first epoxy amine compound are dissolved in a solvent, then the solvent is removed, and crosslinking is performed by heating under reduced pressure. The molar ratio of the carboxy group of the polyester resin having a carboxy group on a side chain to the epoxy group of the first epoxy amine compound is preferably 1:0.125 to 1:1.2 as the carboxy group : the epoxy group. The lower limit of the molar ratio is more preferably 1:0.3, and the upper limit of the molar ratio is more preferably 1:1.1. The molar ratio is most preferably 1:1.

The crosslinked polyester resin of the present invention has self-adhesiveness, and by stacking crosslinked polyester resins of the present invention on each other and heating and pressurizing the crosslinked polyester resins, transesterification occurs at the interface between the crosslinked polyester resins, so that the crosslinked polyester resins can be adhered to each other even without using an adhesive.

The crosslinked polyester resin of the present invention has remoldability, and after the crosslinked polyester resin is deformed into a predetermined shape, by heating the crosslinked polyester resin in the deformed state, transesterification occurs, so that the crosslinked polyester resin is remolded, and the predetermined shape is maintained even when the crosslinked polyester resin is cooled.

The crosslinked polyester resin of the present invention has scratch repair properties, and even when the surface of the crosslinked polyester resin is damaged by a cutter knife or the like, bond exchange by a transesterification reaction occurs by heating the crosslinked polyester resin, so that the crosslinked polyester resin self-repairs. Therefore, the crosslinked polyester resin of the present invention can be used as a main component of a self-repair material. The self-repair material can be used, for example, as a material for paints.

The crosslinked polyester resin of the present invention can be used as a main component of a molding material. That is, the crosslinked polyester resin has good molding processability and extrudability, and thus is useful as a molding material and can be used, for example, as a material for 3D printers or a material for thread-like molded articles.

The crosslinked polyester resin can also be used as a material for reticular structures. A reticular structure is a structure in which portions of thread-like molded articles are connected to each other. A reticular structure can be produced by melting the crosslinked polyester resin, discharging the melted matter through a nozzle, and solidifying the discharged matter while welding the discharged matter.

The content of the crosslinked polyester resin in the solid content of a self-adhesive, the self-repair material, or the molding material is preferably not lower than 60% by mass, more preferably not lower than 80% by mass, and further preferably not lower than 90% by mass, and may be 100% by mass.

Even when the crosslinked polyester resin is immersed in a solvent (especially, an organic solvent), the crosslinked polyester resin is not easily dissolved therein, so that the crosslinked polyester resin has good solvent resistance. Therefore, the crosslinked polyester resin composition is suitable for use, for example, as a laminate material.

The crosslinked polyester resin has good room temperature storage stability. That is, even when the crosslinked polyester resin is stored at a predetermined temperature for a predetermined period of time, the gel fraction of the crosslinked polyester resin hardly changes. In addition, even when the crosslinked polyester resin is stored at a predetermined temperature for a predetermined period of time, the crosslinked polyester resin exhibits softening behavior similar to that before the storage.

In the case where an aromatic polyester resin is used as the polyester resin having a carboxy group on a side chain in the crosslinked polyester resin of the present invention, the crosslinked polyester resin can be used, for example, as an adhesive sheet, an adhesive film, and a molding material. In the case where the crosslinked polyester resin of the present invention is used as an adhesive sheet or an adhesive film, the crosslinked polyester resin may be placed between to-be-adhered members that are desired to be adhered, and may be heated. By the heating, bond exchange by a transesterification reaction occurs, so that the to-be-adhered members can be adhered to each other.

Examples of the to-be-adhered members include resin films, metal foils, etc., and the crosslinked polyester resin can be used as an adhesive for resin films, an adhesive for metal foils, an adhesive for a resin film and a metal

foil, etc. Examples of the resin films include polyimide films, polyester films, PET films, etc. Examples of the metal foils include copper foil, silver foil, gold foil, etc. The adhesiveness of the crosslinked aromatic polyester resin can be evaluated based on 90° peel strength shown in EXAMPLES.

In the case where an aromatic polyester resin is used as the polyester resin having a carboxy group on a side chain in the crosslinked polyester resin of the present invention, bond exchange is enabled by heating the crosslinked polyester resin to an ester bond exchange activation temperature (softening temperature) or higher. Thus, when the crosslinked polyester resin is used as a material for an adhesive, the adhesive is easily peeled by heating the adhesive to the ester bond exchange activation temperature or higher. Therefore, the crosslinked polyester resin can be used as a material for an adhesive for paste-and-remove type repair applications. The peelability of the crosslinked polyester resin when heated to a high temperature can be evaluated based on 90° peel strength upon heating shown in EXAMPLES.

Although the applications of the crosslinked polyester resin have been described above, the crosslinked polyester resin composition containing the crosslinked polyester resin and the transesterification catalyst can also be used in the same applications.

The present application claims priority based on Japanese Patent Application No. 2020-174536 filed on October 16, 2020. All the contents described in Japanese Patent Application No. 2020-174536 are incorporated herein by reference.

## EXAMPLES

Hereinafter, the present invention will be more specifically described by means of examples. However, the present invention is not limited by the following examples and can also be carried out with modifications being made within the scope of the gist described above and below, and each of these modifications are included in the technical scope of the present invention. Hereinafter, the term "part" means "part by mass" unless otherwise stipulated.

Crosslinked polyester resins were each produced by crosslinking a polyester resin having a carboxy group on a side chain by an epoxy-based crosslinking agent having a plurality of epoxy groups. As the polyester resin, an aliphatic polyester resin or an aromatic polyester resin was used.

### Production Example 1 (Aliphatic Polyester Resin A1)

In a glass flask equipped with a stirrer and having a capacity of 50 ml, 15 parts by mole of thiomalic acid, 35 parts by mole of adipic acid, 50 parts by mole of 1,5-pentanediol, and 0.5 parts by mole of scandium triflate were put, and the mixture was stirred at 80°C to be made uniform. After dissolution, the inside of the glass flask was depressurized to 5 mmHg over 30 minutes, and a polycondensation reaction was further carried out at 80°C for 20 hours under a vacuum of 0.3 mmHg or less. After the reaction, the contents were taken out and cooled to obtain a polyester resin material. Next, 70 parts by mole of the polyester resin material was dissolved in 10 ml of N,N-dimethylformamide (DMF) in an eggplant flask having a capacity of 20 ml, then 15 parts by mole of acrylic acid and 2.1 parts by mole of triethylamine as a catalyst were added thereto, and the mixture was stirred at room temperature for 15 hours to cause Michael addition between the thiol group of the thiomalic acid unit and the double bond moiety of the acrylic acid. The obtained product was re-precipitated with methanol to prepare a polyester resin having a carboxy group on a side chain. Hereinafter, the obtained polyester resin is referred to as aliphatic polyester resin A1.

### Production Example 2 (Aromatic Polyester Resin B1)

In a glass flask equipped with a stirrer and having a capacity of 50 ml, 25 parts by mole of maleic acid, 25 parts by mole of adipic acid, 50 parts by mole of bis-2-hydroxyethyl terephthalate (BHET), and 0.5 parts by mole of scandium triflate were put, and the mixture was stirred at 100°C to be made uniform. After dissolution, the inside of the glass flask was depressurized to 5 mmHg over 30 minutes, and a polycondensation reaction was further carried out at 110°C for 4 hours under a vacuum of 0.3 mmHg or lower. After the reaction, the contents were taken out and cooled to obtain a polyester resin material. Next, 50 parts by mole of the polyester resin material was dissolved in 10 ml of N,N-dimethylformamide (DMF) in an eggplant flask having a capacity of 20 ml, then 25 parts by mole of thioglycolic acid and 1.6 parts by mole of triethylamine as a catalyst were added thereto, and the mixture was stirred at room temperature for 15 hours to cause Michael addition of the thioglycolic acid to the maleic acid unit of the polyester resin material with a thiol group. The obtained product was re-precipitated with acetone to prepare a polyester resin having a carboxy group on a side chain and having an aromatic structure. Hereinafter, the obtained polyester resin is referred to as aromatic polyester resin B1.

Production Example 3 (Aromatic Polyester Resin B2)

Apolyester resin material was produced in the same manner as Production Example 2, except that adipic acid was not added and the addition ratio of maleic acid and bis-2-hydroxyethyl terephthalate (BHET) was changed as shown in Table 1. Next, thioglycolic acid was added to the polyester resin material in the same manner as Production Example 2 to prepare a polyester resin having a carboxy group on a side chain and having an aromatic structure. Hereinafter, the obtained polyester resin is referred to as aromatic polyester resin B2.

Production Example 4 (Aromatic Polyester Resin C1)

(1) Polymer Polyol c1

In a reaction vessel equipped with a stirrer, a thermometer, and an outlet cooler, 135 parts by mole of terephthalic acid, 311 parts by mole of isophthalic acid, 5 parts by mole of trimellitic anhydride, 74 parts by mole of 2-methyl-1,3-propanediol, 417 parts by mole of 1,4-cyclohexanediol, and 0.2 parts by mole of tetrabutyl titanate were put, the temperature of the mixture was gradually increased to 250°C, and an esterification reaction was carried out while removing distilled water from the system. After the esterification reaction was completed, initial polymerization was carried out while gradually reducing the pressure to 10 mmHg, the temperature was increased to 250°C, and late polymerization was further carried out at 1 mmHg or lower until a predetermined torque was reached. Thereafter, nitrogen was introduced into the reaction vessel to return the pressure to normal pressure, 5 parts by mole of trimellitic anhydride was added, and a reaction was carried out at 220°C for 30 minutes to obtain a polymer polyol c1.

(2) Polymer Polyol c2

In a reaction vessel equipped with a stirrer, a thermometer, and an outlet cooler, 390 parts by mole of terephthalic acid, 390 parts by mole of isophthalic acid, 440 parts by mole of ethylene glycol, 362 parts by mole of 2,2-dimethyl-1,3-propanediol, and 0.2 parts by mole of tetrabutyl titanate were put, the temperature of the mixture was gradually increased to 250°C, and an esterification reaction was carried out while removing distilled water from the system. After the esterification reaction was completed, initial polymerization was carried out while gradually reducing the pressure to 10 mmHg, the temperature was increased to 250°C, and late polymerization was further carried out at 1 mmHg or lower until a predetermined torque was reached to obtain a polymer polyol c2.

(3) Aromatic Polyester Resin C1

In a reaction vessel equipped with a stirrer, a thermometer, and a reflux tube, 160 parts of the polymer polyol c1, 40 parts of the polymer polyol c2, 5.2 parts of pyromellitic dianhydride, and 200 parts of toluene were put, and were dissolved while gradually increasing the temperature of the mixture to 80°C. After the dissolution, 0.1 parts of triethylamine was added as a reaction catalyst, then the temperature of the mixture was gradually increased to 105°C, and a reaction was carried out for 24 hours. After confirming by infrared spectroscopy (IR) that the reaction had been completed, 108 parts of toluene was added to dilute the solution to obtain a solution in which the solid concentration of a polyester resin having a carboxy group on a side chain was 40%. Hereinafter, the polyester resin having a carboxy group on a side chain is referred to as aromatic polyester resin C1.

The compositions (molar ratios) of the aliphatic polyester resin A1 and the aromatic polyester resins B1 and B2 obtained in Production Examples 1 to 4 are shown in Table 1 below.

[Table 1]

| | | Aliphatic polyester resin A1 | Aromatic polyester resin | | |
|---|---|---|---|---|---|
| | | | B1 | B2 | C1 |
| Composition (molar ratios) | thiomalic acid | 0.30 | - | - | - |
| | adipic acid | 0.70 | 0.50 | - | - |
| | 1,5-pentanediol | 1.0 | - | - | - |
| | maleic acid | - | 0.50 | 1.0 | - |
| | BHET | - | 1.0 | 1.0 | - |
| | acrylic acid | 0.30 | - | - | - |
| | thioglycolic acid | - | 0.50 | 1.00 | - |
| Number average molecular weight (Mn) | | 20000 | 8000 | 10000 | 16000 |
| PDI | | 1.7 | 1.7 | 1.5 | 1.5 |
| Acid value (mgKOH/g) | | 69 | 89 | 190 | 17 |
| $N_{COOH}$ | | 25 | 13 | 34 | 4.8 |

The number-average molecular weight (Mn), the poly dispersity index (PDI), the number of carboxy groups per polymer chain of the polyester resin ($N_{COOH}$), and the acid value were obtained for the obtained aliphatic polyester resin A1 and the aromatic polyester resins B1, B2, and C1, and the results thereof are shown in Table 1 above. The methods for obtaining these properties are as follows.

(Number-Average Molecular Weight (Mn) and Poly Dispersity Index (PDI))

The aliphatic polyester resin or each aromatic polyester resin was dissolved in tetrahydrofuran such that the concentration thereof was about 0.5% by mass, and was filtered through a polytetrafluoroethylene membrane filter having a pore diameter of 0.5 μm to obtain a filtrate as a sample. However, when the polyester resin was not dissolved in tetrahydrofuran, N,N-dimethylformamide was used instead of tetrahydrofuran. The number-average molecular weight (Mn) and the weight-average molecular weight (Mw) were measured by gel permeation chromatography using tetrahydrofuran as a mobile phase and a differential refractometer as a detector. The flow rate was set to 1 mL/min, and the column temperature was set to 30°C. The columns used were KF-802, KF-804L, and KF-806L manufactured by Showa Denko K.K. Monodisperse polystyrene was used as a standard substance (molecular weight standard). Low molecular weight compounds (oligomers, etc.) having a number-average molecular weight less than 1000 were not counted and were omitted. The poly dispersity index (PDI) was calculated from the following equation based on the measured number-average molecular weight (Mn) and weight-average molecular weight (Mw).

$$\text{PDI value} = Mw/Mn$$

(Acid Value)

The aliphatic polyester resin or each aromatic polyester resin of 0.2 g was dissolved in 20 ml of chloroform, phenolphthalein as an indicator was added to the solution, and neutralization titration was performed with a 0.1 N potassium hydroxide ethanol solution. From the titer, the acid value (mg KOH/g) was calculated by converting the number of mg of potassium hydroxide (mg KOH) consumed for the neutralization into the amount per 1 g of the aliphatic polyester resin or the aromatic polyester resin.

(Number of Carboxy Groups per Polymer Chain of Polyester Resin ($N_{COOH}$))

The number of carboxy groups per polymer chain ($N_{COOH}$) was calculated by the following method. For example, when the acid value of the polyester resin having a carboxy group on a side chain is A (mg KOH/g), since the molecular weight of KOH is 56.1 g/mol, the number of moles of carboxy groups per 1 g of the polyester resin having a carboxy group on a side chain can be represented as A/56.1 (mmol/g). When the number-average molecular weight of the

polyester resin having a carboxy group on a side chain is B (g/mol), the number of carboxy groups in the polymer chain can be represented as A/56.1×B/1000 (groups), which was defined as the number $N_{COOH}$ of carboxy groups per polymer chain.

In Examples below, the following epoxy-based crosslinking agents were used.

(1) Multifunctional epoxy compound "TETRAD-X" (trade name) manufactured by MITSUBISHI GAS CHEMICAL COMPANY, INC. (N,N,N',N'-tetraglycidyl-m-xylenediamine)
(2) 4,4'-methylenebis (N,N-diglycidylaniline)
(3) 1,4-butanediol diglycidyl ether
(4) "jER630" (trade name) manufactured by Mitsubishi Chemical Corporation (triglycidyl para-aminophenol)

The multifunctional epoxy compound "TETRAD-X" (trade name) manufactured by MITSUBISHI GAS CHEMICAL COMPANY, INC. and 4,4'-methylenebis(N,N-diglycidylaniline) are each an epoxy amine compound having two tertiary amino groups and four epoxy groups in a molecule, and each have two diglycidylamino groups. "jER630" (trade name) manufactured by Mitsubishi Chemical Corporation is a multifunctional epoxy compound having one tertiary amino group and three epoxy groups in a molecule, and has one diglycidylamino group. 1,4-butanediol diglycidyl ether is a multifunctional epoxy compound that has two epoxy groups in a molecule but does not have any tertiary amino group.

(Example 1)

The aliphatic polyester resin A1 as the polyester resin and 4,4'-methylenebis(N,N-diglycidylaniline) as the epoxy-based crosslinking agent were blended in such a ratio that the molar ratio of the carboxy group of the polyester resin to the epoxy group of the epoxy amine compound was 1:1. Specifically, when the amount of carboxy group of the aliphatic polyester resin A1 is 100 parts by mole, the amount of the epoxy group of 4,4'-methylenebis(N,N-diglycidylaniline) is 25 parts by mole. 10 parts by mass of the aliphatic polyester resin A1 and 1.3 parts by mass of 4,4'-methylenebis(N,N-diglycidylaniline) were dissolved in 10 parts by mass of tetrahydrofuran (THF), and this solution was put into a Teflon (registered trademark)-coated mold and heated to 40°C to volatilize and remove the THF. The sample having the THF removed therefrom was heated under a vacuum condition at 120°C for 4 hours to obtain a crosslinked polyester resin film (thickness of 0.7 mm).

(Examples 2 to 8)

Crosslinked polyester resin films (thickness of 0.7 mm) were produced under the same conditions as the production conditions in Example 1, except that, as shown in Table 2-1, the aliphatic polyester resin A1 or the aromatic polyester resin B1, B2, or C1 was used as the polyester resin and the multifunctional epoxy compound "TETRAD-X" (trade name) manufactured by MITSUBISHI GAS CHEMICAL COMPANY, INC., or 4,4'-methylenebis(N,N-diglycidylaniline) was used as the epoxy-based crosslinking agent.

(Example 9)

The aromatic polyester resin C1 as the polyester resin, the multifunctional epoxy compound "TETRAD-X" (trade name) manufactured by MITSUBISHI GAS CHEMICAL COMPANY, INC., as the epoxy-based crosslinking agent, and a transesterification catalyst were blended in such a ratio that the molar ratio of the carboxy group on the side chain of the polyester resin to the epoxy group of the epoxy amine compound was 1:1. Specifically, when the amount of the carboxy group of the aromatic polyester resin C1 is 100 parts by mole, the amount of the epoxy group of "TETRAD-X" (trade name) is 25 parts by mole, and the amount of zinc acetate as the transesterification catalyst is 5 parts by mole. 10 parts by mass of the aromatic polyester resin C1 and 0.27 parts by mass of "TETRAD-X" (trade name) were dissolved in 10 parts by mass of tetrahydrofuran (THF), 0.03 parts by mass of zinc acetate was dissolved in 1 part by mass of dimethylformamide (DMF), and these two solutions were mixed and dissolved in a Teflon (registered trademark)-coated mold and then heated to 40°C to volatilize and remove the solvent. The sample having the solvent removed therefrom was heated under a vacuum condition at 120°C for 4 hours to obtain a crosslinked polyester resin film (thickness of 0.7 mm).

(Examples 10 and 11)

Crosslinked polyester resin films (thickness of 0.7 mm) were produced under the same conditions as the production conditions in Example 9, except that the blending amount of the transesterification catalyst was changed as shown in Table 2-2.

(Comparative Examples 1 and 3)

Crosslinked polyester resin films (thickness of 0.7 mm) were produced under the same conditions as the production conditions in Example 7, except that, instead of 25 parts by mole of "TETRAD-X" (trade name) as the epoxy-based crosslinking agent, 50 parts by mole (0.30 parts by mass) of 1,4-butanediol diglycidyl ether was used, or 33 parts by mole (0.27 parts by mass) of ‘jER630" (trade name) was used.

(Comparative Examples 2 and 4)

Crosslinked polyester resin films (thickness of 0.7 mm) were produced under the same conditions as the production conditions in Example 11, except that, instead of 25 parts by mole of "TETRAD-X" (trade name) as the epoxy-based crosslinking agent, 50 parts by mole (0.30 parts by mass) of 1,4-butanediol diglycidyl ether was used, or 33 parts by mole (0.27 parts by mass) of ‘jER630" (trade name) was used.

The compositions (parts by mole) of the crosslinked polyester resin films obtained in Examples 1 to 11 and Comparative Examples 1 to 4 are shown in Table 2-1 and Table 2-2 below.

[Table 2-1]

| | | Example 1 | Example 2 | Example 3 | Example 4 | Example 5 | Example 6 | Example 7 | Example 8 |
|---|---|---|---|---|---|---|---|---|---|
| Kinds of polyester resin havinp a carboxy group on a side chain | | A1 | A1 | A1 | B1 | B1 | B2 | C1 | C1 |
| Epoxy-based crosslinking agent (parts by mole/ 100 parts by mole of the carboxy group of the polyester resin) | TETRAD-X | - | - | - | 25 | 12.5 | 12.5 | 25 | - |
| | 4.4'-methylenebis(N,N-diglycidylaniline) | 25 | 12.5 | 3.1 | - | - | - | - | 25 |
| | 1.4-butanediol diglycidyl ether | - | - | - | - | - | - | - | - |
| | jER630 | - | - | - | - | - | - | - | - |
| Transesterification catalyst (parts by mole/ 100 parts by mole of the carboxy group of the polyester resin) | $Zn(OAc)_2$ | - | - | - | - | - | - | - | - |

[Table 2-2]

| | | Example 9 | Example 10 | Example 11 | Comparative Example 1 | Comparative Example 2 | Comparative Example 3 | Comparative Example 4 |
|---|---|---|---|---|---|---|---|---|
| Kinds ot polyester resin having a carboxy group on a side chain | | C1 | C1 | C1 | C1 | C1 | C1 | C1 |
| Epoxy-based crosslinking agent (parts by mole/ 100 parts by mole of the carboxy group of the polyester resin) | TETRAD-X | 25 | 25 | 25 | - | - | - | - |
| | 4.4'-methylenebis (N,N-diglycidylaniline) | - | - | - | - | - | - | - |
| | 1,4-butanediol diglycidyl ether | - | - | - | 50 | 50 | - | - |
| | jER630 | - | - | - | - | - | 33 | 33 |
| Transesterification catalyst (parts by mole/ 100 parts by mole of the carboxy group of the polyester resin) | $Zn(OAc)_2$ | 5 | 10 | 20 | - | 20 | - | 20 |

The properties of the crosslinked polyester resin films shown in Tables 3-1 and 3-2 below are the results of the following evaluations.

(Softening Temperature)

A change in linear expansion coefficient of each crosslinked polyester resin film was measured using "TMA7100" manufactured by Hitachi, Ltd. The initial distance between jigs was set to 15 mm, and for a test piece (a rectangular shape having a width of 4 mm, a length of 20 mm, and a thickness of 0.7 mm) cut out from the crosslinked polyester resin film, the measurement was performed by heating the test piece from room temperature to 300°C at a temperature increase rate of 10°C/min in a nitrogen gas atmosphere while applying a minute constant tension (20 mN) in order to prevent deflection of the test piece. Among the measurement results, the results of Example 11, Comparative Example 2, and Comparative Example 4 are shown in FIG. 1. The vertical axis shows the displacement of the linear expansion coefficient. In FIG. 1, a solid line shows the results of Example 11, a dotted line shows the results of Comparative Example 2, and an alternate long and short dash line shows the results of Comparative Example 4. The temperature at the inflection point of the linear expansion coefficient change curve was obtained as a softening temperature.

(Storage Elastic Modulus (DMA))

The storage elastic modulus (DMA) of each crosslinked polyester resin film was measured. The storage elastic modulus (DMA) was measured by setting the resin in a dynamic viscoelasticity measuring device "DVA-200" manufactured by IT Keisoku Seigyo K.K., setting the measurement frequency to 10 Hz, and heating the resin from room temperature to 200 to 300°C at a temperature increase rate of 4°C/min. Among the measurement results, the results of Example 11, Comparative Example 2, and Comparative Example 4 are shown in FIG. 2. The vertical axis shows the storage elastic modulus. In FIG. 2, a solid line shows the results of Example 11, a dotted line shows the results of Comparative Example 2, and an alternate long and short dash line shows the results of Comparative Example 4. The upper limit of the heating temperature was 290°C for Example 11, 200°C for Comparative Example 2, and 300°C for Comparative Example 4.

As is obvious from FIG. 2, no sharp change in storage elastic modulus was observed around 200°C for any of the resins, so that it is considered that a crosslinked structure is maintained at 200°C.

(Self-Adhesiveness)

In a state where ends of two crosslinked polyester resin films (thickness of 0.7 mm) were stacked on each other and the crosslinked polyester resin films were heated to a temperature equal to or higher than the softening temperature, the crosslinked polyester resin films were pressed at 400 kPa in the stacking direction and held in this state for 2 hours to produce a laminated crosslinked polyester resin film. The case where the stacked lamination portions adhered to each other was evaluated as having self-adhesiveness (◦), and the case where the stacked lamination portions did not adhere to each other was evaluated as having no self-adhesiveness (×).

(Remoldability)

Each crosslinked polyester resin film (thickness of 0.7 mm) was spirally wrapped around a spatula, then fixed to the spatula at both ends thereof with tape, and left at a high temperature (softening temperature + about 20°C) for 2 hours. Then, after the film was allowed to cool to room temperature, the tape was removed, and the crosslinked polyester resin film was removed from the spatula. The case where the wrapped shape was maintained even after the crosslinked polyester resin film was removed from the spatula was evaluated as having remoldability (◦), and the case where the wrapped shape was not maintained and the shape returned to the flat shape was evaluated as having no remoldability (×).

(Scratch Repair Properties)

On the surface of each crosslinked polyester resin film (thickness of 0.7 mm), a scratch having a length of about 1 cm and a depth of about 0.1 mm was made by a cutter. This film was left at a high temperature (softening temperature + about 20°C) for 10 minutes and then allowed to cool to room temperature. The case where the scratch made on the crosslinked polyester resin film disappeared was evaluated as having scratch repair properties (◦), and the case where the scratch made on the crosslinked polyester resin film did not disappear was evaluated as having no scratch repair properties (×).

(Glass Transition Temperature Tg)

For the crosslinked polyester resin films obtained in the Examples and the Comparative Examples, the glass transition temperature (Tg) was measured by performing thermal analysis through heating from the temperature -100°C to 300°C at a temperature increase rate of 20°C/min in a nitrogen atmosphere using a DSC apparatus "Model: DSC7020" manufactured by Hitachi High-Tech Science Corporation.

(90° Peel Strength)

A test piece having a length of 20 mm and a width of 50 mm was cut out from each of the obtained crosslinked polyester resin films (thickness of 0.7 mm). The cut-out test piece was placed on a PET film having a thickness of 25 μm (manufactured by Toyobo Co., Ltd.), and the same type of PET film was placed on the test piece to form a three-layer structure of "PET film/crosslinked polyester resin film/PET film". Each layer was adhered by pressurizing and heating at 170°C and 2 MPa for 280 seconds in a heat press machine. The laminate obtained through the adhesion was used as a 90° peel strength evaluation sample.

Moreover, a 90° peel strength evaluation sample was produced under the same conditions, except that instead of the above PET film, a polyimide film (PI, "APICAL" (registered trademark) manufactured by KANEKA CORPORATION, thickness of 12.5 μm) was used to form a three-layer structure of "PI/crosslinked polyester resin film/PI".

Moreover, a 90° peel strength evaluation sample was produced under the same conditions, except that instead of the above PET film, a rolled copper foil (thickness of 20 μm) and a polyimide film (PI, "APICAL" (registered trademark) manufactured by KANEKA CORPORATION, thickness of 12.5 μm) were used to form a three-layer structure of "Cu/crosslinked polyester resin film/PI".

The 90° peel strength was measured at 25°C and a tensile speed of 50 mm/min using Autograph AG-Xplus manufactured by Shimadzu Corporation. The adhesiveness of each film was evaluated based on the measured 90° peel strength according to the following criteria. The evaluation results are shown in Table 3-1 or Table 3-2 below. "-" means that the evaluation was not performed.

<Evaluation Criteria>

∘∘: Not less than 1.0 N/mm
∘: Not less than 0.5 N/mm and less than 1.0 N/mm
Δ: Not less than 0.35 N/mm and less than 0.5 N/mm
×: Less than 0.35 N/mm

(Molding Processability)

A mold was filled with a sample obtained by cutting each of the obtained crosslinked polyester resin films (thickness of 0.7 mm) into a shape having a width of 5 mm and a length of 5 mm. As the mold, one made by cutting out a circle having a diameter of 8 mm from a Teflon (registered trademark) sheet having a thickness of 1 mm was used. Then, the mold was pressurized and heated in a heat press machine. The pressurization condition was set to 4 MPa, and the heating condition was set to softening temperature +30°C, 15 min.

The case where the crosslinked polyester resin film piece was successfully molded into a mold shape was evaluated as o for molding processability, and the case where the crosslinked polyester resin film piece failed to be molded into a mold shape was evaluated as × for molding processability. The evaluation results are shown in Table 3-1 or Table 3-2 below. "-" means that the evaluation was not performed.

(Extrudability)

A sample obtained by cutting 6 g of each of the obtained crosslinked polyester resin films (thickness of 0.7 mm) into a shape having a width of 5 mm and a length of 5 mm was fed in three separate parts at a barrel temperature of 150°C into a twin-screw extruder "MiniLab" manufactured by HAAKE. After the sample feeding was completed, the sample was kneaded at a screw rotation speed of 50 $min^{-1}$ for 5 minutes, and then the kneaded material was extruded from the barrel. The case where after kneading, the kneaded material was successfully discharged to obtain a thread thread-like molded article was evaluated as o for extrudability, and the case where the kneaded material failed to be discharged and a thread thread-like molded article was not obtained was evaluated as × for extrudability. The evaluation results are shown in Table 3-1 or Table 3-2 below. In Examples 6 and 8, the barrel temperature was changed to 200°C

to evaluate extrudability. "-" means that the evaluation was not performed.

(Room Temperature Storage Stability)

The room temperature storage stability of each of the obtained crosslinked polyester resin films was evaluated based on a change rate of a gel fraction and softening behavior.

(1) Change Rate of Gel Fraction

First, the gel fraction of each of the obtained crosslinked polyester resin films was measured. The gel fraction was measured by the following method.

Each of the obtained crosslinked polyester resin films of 0.125 g was weighed, and immersed in 25 mL of methyl ethyl ketone at room temperature for 2 hours. Then, only the remaining gel component was dried in a vacuum dryer at 80°C for 1 hour, and the mass of the gel component was measured. The gel fraction was determined by the following equation.

$$\text{Gel fraction (\%)} = (\text{weight of remaining gel component after drying} / 0.125) \times 100$$

Next, the crosslinked polyester resin film was stored at a constant temperature of 5°C, 25°C, or 40°C for 6 months, and the gel fraction was measured by the above method when 6 months elapsed. A change rate from the gel fraction at the start of storage was calculated based on the gel fraction at the start of storage and the gel fraction after storage for 6 months. The change rate was defined as the absolute value of the difference in gel fraction (%) before and after storage for 6 months, as shown in the following equation.

$$\text{Change rate} = \text{gel fraction (\%) at elapse of 6 months} - \text{gel fraction (\%) at start of storage}$$

The case where the change rate was less than 10% was evaluated as ◦, the case where the change rate was not less than 10% and not greater than 25% was evaluated as Δ, and the case where the change rate was greater than 25% was evaluated as ×. The evaluation results are shown in Table 3-1 or Table 3-2 below. "-" means that the evaluation was not performed.

(2) Softening Behavior

When each of the obtained crosslinked polyester resin films was stored at 25°C for 6 months, the presence or absence of softening behavior due to a bond exchange reaction was evaluated by stress relaxation measurement. As the stress relaxation measurement, a stress relaxation test was performed at temperatures of 100°C, 150°C, and 180°C using MCR302 (manufactured by Anton Paar GmbH). The test was performed in a $N_2$ gas atmosphere. As a test piece, a disk-shaped sample cut out from the above crosslinked polyester resin film and having a diameter of 8 mm and a thickness of 0.7 mm was used.

The case where softening behavior was exhibited when the stress relaxation test was performed at any of the temperatures of 100°C, 150°C, and 180°C even after storage at 25°C for 6 months was evaluated as ◦, and the case where no softening behavior was exhibited when the stress relaxation test was performed at any of the temperatures of 100°C, 150°C, and 180°C after storage at 25°C for 6 months was evaluated as ×. The evaluation results are shown in Table 3-1 or Table 3-2 below. The fact that stress relaxation is observed after storage at 25°C for 6 months indicates that the softening properties due to bond exchange are maintained even after storage and remain unchanged from the initial behavior during the storage at room temperature for a long period of time.

(Solvent Resistance)

One sample obtained by cutting each of the obtained crosslinked polyester resin films (thickness of 0.7 mm) into a shape having a width of 5 mm and a length of 5 mm was added to one screw bottle. Three screw bottles were prepared per one level, 3 mL of ethanol, dimethylformamide (DMF), or tetrahydrofuran (THF) was added to each screw bottle, and the screw bottles were allowed to stand at room temperature for 5 hours. The case where after standing for 5 hours, there was no change from before immersion was evaluated as having good solvent resistance "oo", the case where the sample swelled but was not dissolved was evaluated as having solvent resistance "◦", and the case where the sample was dissolved was evaluated as having no solvent resistance "×". The evaluation results are shown in Table

3-1 or Table 3-2 below. "-" means that the evaluation was not performed.

(90° peel strength upon heating)

For "Cu/crosslinked polyester resin film/PI" among the above 90° peel strength evaluation samples, the 90° peel strength upon heating was measured using a thermostatic chamber (THERMOSTATIC CHAMBER, manufactured by Shimadzu Corporation) at a temperature that was the softening temperature + 30°C of each sample shown in Table 3-1 and Table 3-2. The 90° peel strength was measured, using Autograph AG-Xplus manufactured by Shimadzu Corporation, at a tensile speed of 50 mm/min and a temperature that was softening temperature of each sample + 30°C. The peelability of the laminate was evaluated based on the measured 90° peel strength upon heating according to the following criteria. The evaluation results are shown in Table 3-1 and Table 3-2 below. "-" means that the evaluation was not performed.

<Evaluation Criteria>

◦◦: Less than 3.5 N/mm
◦: Not less than 0.35 N/mm and less than 0.5 N/mm
Δ: Not less than 0.5 N/mm and less than 1.0 N/mm
×: Not less than 1.0 N/mm

[Table 3-1]

| | | Example 1 | Example 2 | Example 3 | Example 4 | Example 5 | Example 6 | Example 7 | Example 8 |
|---|---|---|---|---|---|---|---|---|---|
| Softening temperature (°C) | | 180 | 175 | 150 | 170 | 160 | 200 | 175 | 200 |
| Self-adhesiveness | | ○ | ○ | ○ | ○ | ○ | ○ | ○ | ○ |
| Remoldability | | ○ | ○ | ○ | ○ | ○ | ○ | ○ | ○ |
| Scratch-repairing properties | | ○ | ○ | ○ | ○ | ○ | ○ | ○ | ○ |
| Glass transition temperature (°C) | | -15 | -24 | -44 | 50 | 36 | 52 | 6 | 7 |
| 90° peel strength | PET/PET | × | × | × | ○ | ○ | - | ○ | - |
| | PI/PI | × | × | × | ○ | ○ | ○ | ○ | ○ |
| | Cu/PI | × | × | × | ○ | ○ | ○ | ○ | ○ |
| Molding processability | | ○ | ○ | ○ | ○ | ○ | ○ | ○ | ○ |
| Extrudability | | ○ | ○ | ○ | ○ | ○ | ○ (200°C) | ○ | ○ (200°C) |
| Room temperature storage stability | gel fraction (5°C) | ○ | ○ | ○ | ○ | ○ | ○ | ○ | ○ |
| | gel fraction (25°C) | ○ | ○ | ○ | ○ | ○ | ○ | ○ | ○ |
| | gel fraction (40°C) | ○ | ○ | ○ | ○ | ○ | ○ | ○ | ○ |
| | softening behavior | ○ | ○ | ○ | ○ | ○ | ○ | ○ | ○ |
| Solvent resistance | ethanol | ○ | ○ | ○ | ○ | ○ | ○ | ○○ | ○○ |
| | DMF | ○ | ○ | ○ | ○ | ○ | ○ | ○○ | ○○ |
| | THF | ○ | ○ | ○ | ○ | ○ | ○ | ○ | ○ |
| 90° peel strength upon heating | heating temperature (°C) | - | - | - | 200 | 190 | 230 | 205 | 230 |
| | evaluation | - | - | - | ○ | ○ | ○ | ○○ | OO |

[Table 3-2]

| | | Example 9 | Example 10 | Example 11 | Comparative Example 1 | Comparative Example 2 | Comparative Example 3 | Comparative Example 4 |
|---|---|---|---|---|---|---|---|---|
| Softening temperature (°C) | | 173 | 170 | 165 | - | 125 | - | 150 |
| Self-adhesiveness | | ○ | ○ | ○ | × | ○ | × | ○ |
| Remoldability | | ○ | ○ | ○ | × | ○ | × | ○ |
| Scratch-repairing properties | | ○ | ○ | ○ | × | ○ | × | ○ |
| Glass transition temperature (°C) | | 7 | 9 | 10 | 7 | 10 | 12 | 8 |
| 90° peel strength | PET/PET | ○ | ○ | ○ | × | ○ | × | ○ |
| | PI/PI | ○ | ○ | ○ | × | ○ | × | ○ |
| | Cu/PI | ○ | ○ | ○ | × | ○ | × | ○ |
| Molding processability | | ○ | ○ | ○ | - | - | - | - |
| Extrudability | | ○ | ○ | ○ | × | ○ | × | ○ |
| Room temperature storage stability | gel fraction (5°C) | ○ | ○ | ○ | - | - | - | - |
| | gel fraction (25°C) | ○ | ○ | ○ | - | - | - | - |
| | gel fraction (40°C) | ○ | ○ | ○ | - | - | - | - |
| | softening behavior | ○ | ○ | ○ | - | - | - | - |
| Solvent resistance | ethanol | ○○ | ○○ | ○○ | - | - | - | - |
| | DMF | ○○ | ○○ | ○○ | - | - | - | - |
| | THF | ○ | ○ | ○ | - | - | - | - |
| 90° peel strength upon heating | heating temperature (°C) | 203 | 200 | 195 | - | - | - | - |
| | evaluation | ○○ | ○○ | ○○ | - | - | - | - |

The crosslinked polyester resin film obtained in Example 7 was cut into a fine resin shape (5 mm wide x 5 mm long x 0.7 mm thick), melted at 200°C, discharged into cooling water at a singlehole discharge rate of 1.0 g/min through a nozzle having round solid-shaped orifices having a hole diameter of 1.0 mm and arranged at intervals of 4 mm in a nozzle effective surface having a width of 40 cm and a length of 4 cm, and solidified therein. Specifically, the cooling water was placed 10 cm below the discharge position, and stainless steel endless nets having a width of 50 cm were placed parallel to each other at an interval of 3 cm to form a pair of take-up conveyors partially exposed over a water surface. The melted material was taken up on the conveyors, while being welded on the contacted parts, and sandwiched from both sides. The sandwiched material was introduced into the cooling water at a speed of 1.0 m/min to be solidified. Then, the solidified material was dried in a hot-air dryer at 70°C for 15 minutes, and then cut into a predetermined size. As a result, a reticular structure having a thickness of 3 cm and a density of 0.060 g/$cm^3$ was obtained.

The results of Table 3-1 and Table 3-2 can be considered as follows.

The crosslinked polyester resins obtained in Examples 1 to 11 are each obtained by using an epoxy amine compound having two or more tertiary amino groups and two or more epoxy groups in a molecule, as the epoxy-based crosslinking agent, and satisfy the requirements specified in the present invention. In Examples 1 to 8, even without containing any transesterification catalyst, softening behavior due to bond exchange by a transesterification reaction was exhibited, and properties such as self-adhesiveness, remoldability, and scratch repair properties were obtained. The remoldability is considered to be exhibited due to the fact that exchange of ester bond was activated at high temperatures and fixation to a new equilibrium network structure was achieved during cooling. The scratch repair properties were considered to be exhibited due to the fact that exchange of ester bond was activated at high temperatures, resulting in promotion of rearrangement of molecular chains in the vicinity of the surface of the crosslinked polyester resin film. In addition, in Examples 1 to 8, since no transesterification catalyst is contained, the crosslinked polyester resin films can be utilized for materials around electronic materials.

Examples 9 to 11 are examples in which an epoxy amine compound having two or more tertiary amino groups and two or more epoxy groups in a molecule was used as the epoxy-based crosslinking agent and a transesterification catalyst was blended, and when Examples 9 to 11 are compared with Example 7 above, it is confirmed that as the transesterification catalyst is blended and the blending amount thereof is increased, bond exchange by a transesterification reaction becomes more active, and the softening temperature tends to decrease while maintaining heat resistance. That is, it is found that the softening temperature can be adjusted based on the blending amount of the transesterification catalyst.

The crosslinked polyester resin films of Examples 1 to 11 had excellent molding processability, extrudability, storage stability at room temperature, and solvent resistance. Among these films, the crosslinked polyester resin films of Examples 4 to 11 in which an aromatic polyester resin is used as the polyester resin having a carboxy group on a side chain had high 90° peel strength and were useful as an adhesive. In addition, it is found that the crosslinked polyester resin films of Examples 4 to 11 had low 90° peel strength when heated to the softening temperature + 30°C and were easily peeled off.

On the other hand, the crosslinked polyester resins obtained in Comparative Examples 1 to 4 are each a crosslinked polyester resin for which an epoxy amine compound having two or more tertiary amino groups and two or more epoxy groups in a molecule was not used as the epoxy-based crosslinking agent, and do not satisfy the requirements specified in the present invention. In Comparative Example 1, bond exchange by a transesterification reaction did not proceed, so that properties such as self-adhesiveness, remoldability, and scratch repair properties were not exhibited. In Comparative Example 2, since the transesterification catalyst was contained, bond exchange by a transesterification reaction became active, so that properties such as self-adhesiveness, remoldability, and scratch repair properties were exhibited. However, when compared with Example 11 in which the same amount of the transesterification catalyst was contained, the softening temperature was relatively low. The epoxy-based crosslinking agent used in Comparative Example 3 had three epoxy groups in a molecule but had only one tertiary amino group, so that bond exchange by a transesterification reaction did not proceed sufficiently, so that properties such as self-adhesiveness, remoldability, and scratch repair properties were not exhibited. In Comparative Example 4, since the transesterification catalyst was blended with respect to Comparative Example 3, bond exchange by a transesterification reaction became active, so that properties such as self-adhesiveness, remoldability, and scratch repair properties were exhibited. However, when compared with Example 11 in which the same amount of the transesterification catalyst was contained, the softening temperature was relatively low.

Next, using a test piece obtained by sandwiching the crosslinked polyester resin film (thickness of 0.7 mm) obtained in Example 11 between PET films, PI films, or Al substrates, a 180° peeling test and a shearing test were conducted to evaluate the adhesiveness of the crosslinked polyester resin film. Specifically, the crosslinked polyester resin film obtained in Example 11 was sandwiched between two PET films having a thickness of 100 $\mu$m and pressed at 180°C and 20 MPa for 10 minutes to obtain a test piece a. The crosslinked polyester resin film obtained in Example 11 was sandwiched between two PI films having a thickness of 25 $\mu$m and pressed at 180°C and 20 MPa for 10 minutes to obtain a test piece b. The crosslinked polyester resin film obtained in Example 11 was sandwiched between two Al

substrates having a thickness of 1.5 mm and held at 200°C for 1 hour to obtain a test piece c.

In the 180° peeling test, the maximum stress was measured when an end portion on one side of the PET films or PI films attached together was peeled off along the plane direction of the test piece while being folded back 180°. For the test piece c, the 180° peeling test was not conducted. In the shearing test, the maximum value of the shearing force was measured when the PET films, PI films, or Al substrates attached together were pulled in directions opposite to each other along the plane direction of the test piece. The measurement results are shown in Table 4 below.

[Table 4]

| | PET | PI | Al |
|---|---|---|---|
| 180° peeling (N/mm) | 0.9 | 1.4 | - |
| Shearing force (N/mm) | 15.2 | 3.5 | 0.7 |

As is obvious from the results of Table 4, it is found that the PET films, the PI films, and the Al substrates can be adhered by using the crosslinked polyester resin film obtained in Example 11.

## Claims

1. A crosslinked polyester resin in which a polyester resin having a carboxy group on a side chain is crosslinked by an epoxy-based crosslinking agent having a plurality of epoxy groups, wherein the epoxy-based crosslinking agent includes an epoxy amine compound having two or more tertiary amino groups and two or more epoxy groups in a molecule, and
an amount of the epoxy amine compound is 3 to 30 parts by mole per 100 parts by mole of the carboxy group of the polyester resin.

2. The crosslinked polyester resin according to claim 1, wherein a molar ratio of the carboxy group of the polyester resin to the epoxy group of the epoxy amine compound is 1:0.125 to 1:1.2 as the carboxy group : the epoxy group.

3. The crosslinked polyester resin according to claim 1 or 2, wherein the tertiary amino group and the epoxy group contained in the epoxy amine compound form a diglycidylamino group.

4. The crosslinked polyester resin according to any one of claims 1 to 3, wherein the epoxy amine compound has a molecular weight of not higher than 800.

5. A crosslinked polyester resin composition comprising:

   a transesterification catalyst; and
   the crosslinked polyester resin according to any one of claims 1 to 4.

[FIG. 1]

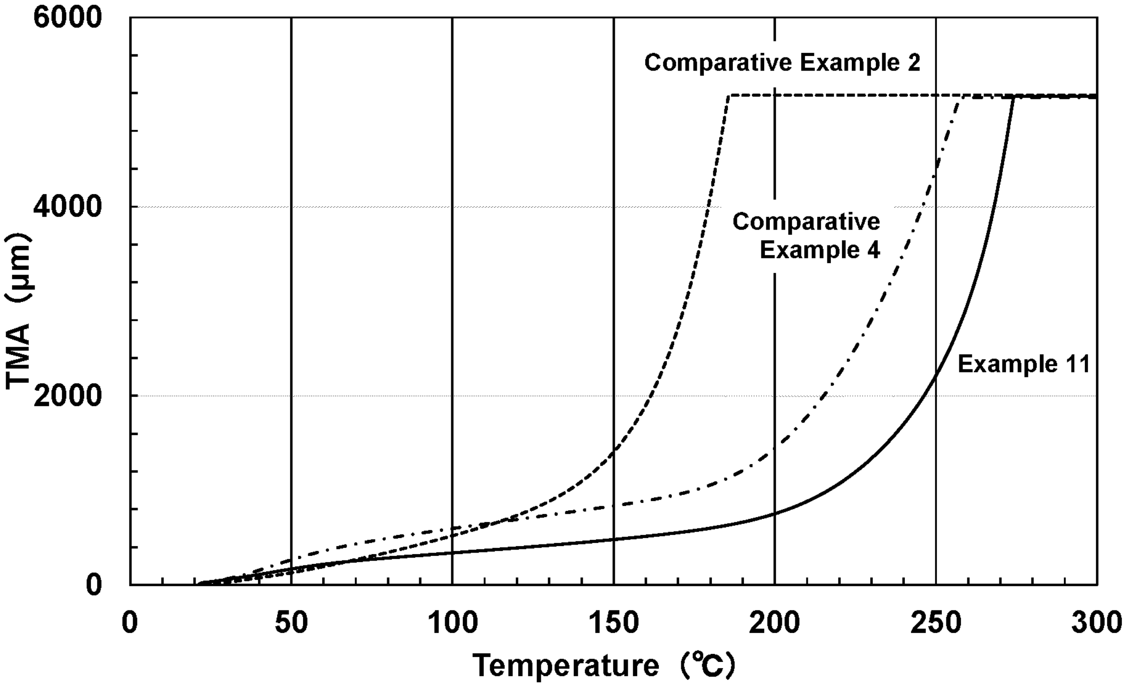
6000
4000
2000
0
TMA (μm)
0
50
100
150
200
250
300
Temperature (℃)
Comparative Example 2
Comparative Example 4
Example 11

[FIG. 2]

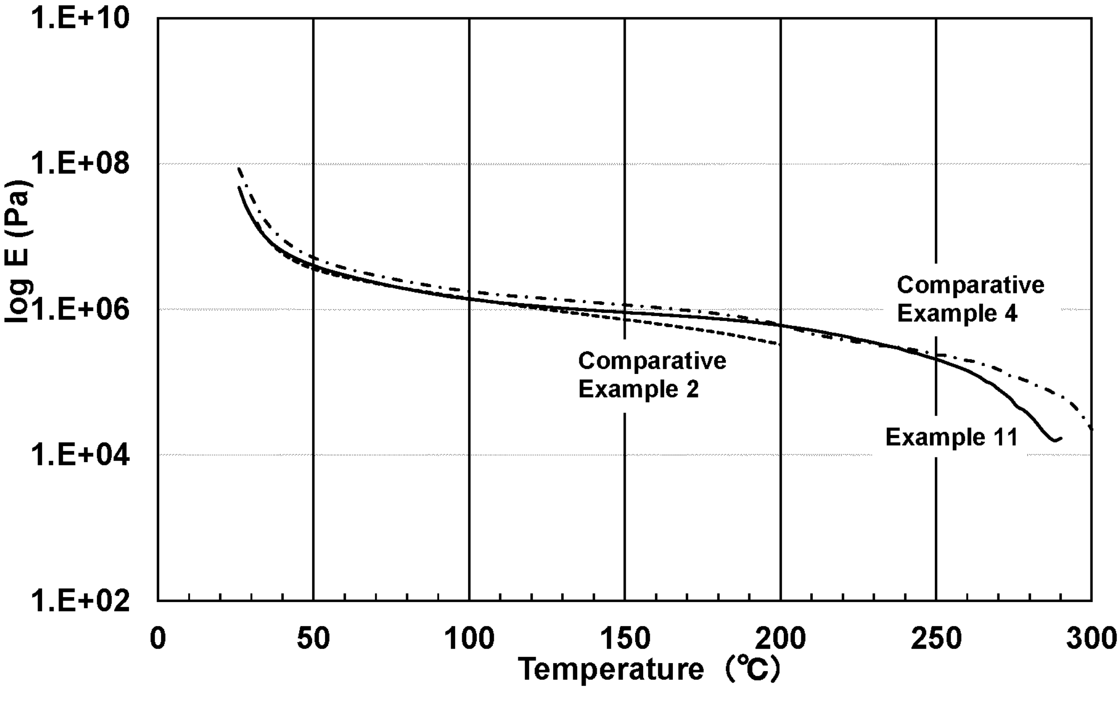
1.E+10
1.E+08
1.E+06
1.E+04
1.E+02
log E (Pa)
0
50
100
150
200
250
300
Temperature (℃)
Comparative Example 4
Comparative Example 2
Example 11

## INTERNATIONAL SEARCH REPORT

International application No.
**PCT/JP2021/038128**

**A. CLASSIFICATION OF SUBJECT MATTER**

***C08G 59/40***(2006.01)i; ***C09J 11/00***(2006.01)i; ***C08L 67/00***(2006.01)i; ***C09J 163/00***(2006.01)i; ***C09J 167/00***(2006.01)i; ***C08G 63/91***(2006.01)i
FI: C08G63/91; C08G59/40; C08L67/00; C09J11/00; C09J163/00; C09J167/00

According to International Patent Classification (IPC) or to both national classification and IPC

**B. FIELDS SEARCHED**

Minimum documentation searched (classification system followed by classification symbols)

C08G59/40; C09J11/00; C08L67/00; C09J163/00; C09J167/00; C08G63/91

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-119872 A (MITSUBISHI CHEMICAL HOLDINGS CORP.) 22 July 2019 (2019-07-22) claims 1, 6-7, paragraphs [0036], [0040], examples 2, 3, 5, 6, 8 | 1-5 |
| X | JP 2014-141603 A (TOYO INK SC HOLDINGS CO., LTD.) 07 August 2014 (2014-08-07) claim 1, paragraphs [0064], [0086], [0097]-[0099], [0117], examples 17, 19, 20 | 1-5 |
| A | JP 8-104733 A (MAZDA MOTOR CORP.) 23 April 1996 (1996-04-23) entire text, all drawings | 1-5 |
| A | JP 2001-279170 A (NISSAN CHEMICAL INDUSTRIES, LTD.) 10 October 2001 (2001-10-10) entire text, all drawings | 1-5 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2021** | **21 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2021/038128**

| Patent document cited in search report | Publication date (day/month/year) | Patent family member(s) | Publication date (day/month/year) |
|---|---|---|---|
| JP 2019-119872 A | 22 July 2019 | (Family: none) | |
| JP 2014-141603 A | 07 August 2014 | (Family: none) | |
| JP 8-104733 A | 23 April 1996 | (Family: none) | |
| JP 2001-279170 A | 10 October 2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018105543 A
- WO 2018179707 A
- WO 2020045439 A
- JP 2020174536 A